# EUROPEAN PATENT APPLICATION

(11) **EP 4 848 764 A1**
(43) Date of publication of application: **02.12.2026**
(21) Application number: 25179466.5
(22) Date of filing: 28.05.2025
(51) Int. Cl.: H04W 4/20, G01S 1/68, G01S 5/02, H04W 4/80, H04W 84/18, H04W 84/20

(54) **SYSTEMS AND METHODS FOR PROCESSING BEACON SIGNALS**

(71) Applicant: Hitachi Energy Ltd, 8050 Zürich (CH)
(72) Inventor: Deck, Bernhard, 79809 Weilheim (DE); Dan, Andrei-Marian, 200480 Craiova (RO); Castellanos, John Henry, 68309 Mannheim (DE); Gore, Rahul, 12834 Stockholm (SE); ElHussini, Hossam, Longueuil, J3Y0T3 (CA); Sakr, Samir, Alberta, T3R0N8 (CA)
(74) Representative: AWA Sweden AB

(57) **Abstract**

According to an aspect of the present disclosure there is provided a system (100) for processing beacon signals, the system (100) comprising: a plurality of receivers (120) configured to receive beacon signals transmitted from a plurality of sensing devices (110), wherein each beacon signal comprises an identifier identifying the sensing device from which the beacon signal is transmitted and a beacon counter incremented for each successive beacon signal transmitted from the sensing device identified by the identifier; and a processing unit configured to: receive, from each receiver of the plurality of receivers (120), data relating to the received beacon signals, and merge the received data based on the identifiers and the beacon counters of the received beacon signals to generate a consolidated dataset.

## Description

### Technical field

The present disclosure relates to wireless communication systems for industrial monitoring applications. More specifically, the present disclosure relates to methods and systems for improving data reliability in beacon-based monitoring.

### Background

Real-time monitoring systems are present in numerous environments, ranging from power generation and distribution to transportation and manufacturing. These systems rely on reliable acquisition of data such as process parameters, equipment status, and environmental conditions. Traditionally, wired connections have been favored for their robustness in harsh industrial settings. However, the cost and complexity of installing and maintaining wired infrastructure, particularly in large or mobile applications, have driven interest in wireless communication technologies.

Beacon-based systems have emerged as a potential solution for wireless monitoring. These systems typically employ small, low-power transmitters (i.e., beacons) to broadcast information. A receiver then interprets these signals.

However, extending beacon technology to demanding industrial environments presents significant challenges. A key limitation arises from the inherent nature of broadcast communication. Each beacon transmits signals independently, and the receiver must sequentially process each received signal. While techniques like randomized transmission delays are employed to mitigate collisions and overlaps, these approaches are not foolproof. In environments with a high density of beacons, the probability of a receiver being occupied when a new signal arrives remains substantial.

Furthermore, the limited data payload of individual beacon transmissions often necessitates a high transmission frequency to convey all required information. This increased frequency exacerbates the contention problem, increasing the likelihood of signal loss. The consequence is a degradation in data integrity, potentially leading to incomplete or inaccurate monitoring.

Consequently, the potential for data loss remains a significant barrier to widespread adoption in critical industrial applications where reliability and data completeness are paramount. The issue is particularly acute in applications requiring the detection of rapid or transient events, where even a single missed transmission can lead to inaccurate assessments or delayed responses.

Hence, there is a need for improved systems and methods capable of reliably acquiring data from a plurality of wireless transmitters.

### Summary

An objective of the present disclosure is to provide robust and reliable processing of beacon signals with systems and methods that alleviate at least some drawbacks of present solutions or improve over present solutions in at least one aspect or provide an alternative over present solutions in at least one aspect.

Another objective is to enable efficient consolidation of data from multiple sensing devices.

Yet a further objective is to mitigate signal loss and enable comprehensive data capture from a plurality of sensing devices.

These and other objectives are at least partly met by the invention as defined in the independent claims. Preferred examples are set out in the dependent claims.

According to a first aspect, there is provided a system for processing beacon signals, the system comprising a plurality of receivers configured to receive beacon signals transmitted from a plurality of sensing devices, wherein each beacon signal comprises an identifier identifying the sensing device from which the beacon signal is transmitted and a beacon counter incremented for each successive beacon signal transmitted from the sensing device identified by the identifier; and a processing unit configured to receive, from each receiver of the plurality of receivers, data relating to the received beacon signals, and merge the received data based on the identifiers and the beacon counters of the received beacon signals to generate a consolidated dataset.

The system according to the first aspect provides a more accurate tracking of sensing devices and their data streams, enabling a more reliable monitoring and control. The use of beacon counters ensures data integrity and allows for the detection of lost and/or duplicated beacon signals.

The beacon signals may be transmitted wirelessly, e.g., utilizing frequencies above 1 GHz. For example, a sensing device (i.e., a beacon device) may be referred to as a short-range wireless transmitter, e.g., operating above 1 GHz (such as at 2.4 GHz).

Hence, the system enables a more reliable capture and consolidation of data from a plurality of sensing devices, e.g., employing short-range wireless communication protocols to facilitate cost-effective and low-power monitoring solutions. The use of wireless communication enables a more flexible deployment even in challenging industrial environments, such as electrical substations and/or high-power converter systems, where wired connections may be impractical or costly.

A beacon may employ advertising protocols and/or custom advertising.

Beacon signals may be referred to as discrete data packets (e.g., 21 bytes in length) broadcast by these transmitters, for example with a configurable cadence ranging from 20 milliseconds to over one minute. A beacon signal may incorporate Unencrypted identifiers (UID), encrypted identifiers (EID), or telemetry data (TLM), e.g., encrypted TLM data. In an example, beacon signals may be referred to as telegrams.

Beacons may typically be designed for unidirectional communication, e.g., providing a cost-effective and/or low-power method for transmitting short bursts of information. In other words, a beacon may be equipped with a transmitter, rather than a combination of a transmitter and receiver.

Beacon signals may, e.g., be transmitted in a broadcast mode of the sensing devices (i.e., beacons). Beacons may be capable of supporting encryption via protocols, such as AES 128-bit encryption with user-defined keys. Beacons signals may further enable reliable reception and interpretation of the transmitted data packets to identify the source sensing device and associated sensor readings. However, the system described herein is designed to mitigate potential issues arising from multiple concurrent beacon signals at a receiver site, ensuring comprehensive data capture.

For the purposes of this disclosure, a "beacon counter" may refer to a sequentially incrementing numerical value embedded within each beacon signal. The beacon counter may function in conjunction with the identifier to ensure unambiguous identification of each beacon signal transmission. This combination provides a robust mechanism for resolving discrepancies, mitigating data loss, and accurately reconstructing data streams.

The identifier may be a unique identifier. The identifier may, e.g., be a unique telegram identifier, such as an alphanumeric code. For example, the identifier may be unique in a local, global, and/or system wide context.

Hence, the identifier may, e.g., be configured to enable differentiation between individual beacon signal transmissions, while the beacon counter may establish a chronological sequence. Hereby, the system enables reliable and systematic merging of data from multiple beacon signals received at, or obtained by, multiple receivers. This combined approach ensures data integrity and provides a comprehensive view of monitored conditions, even in environments prone to signal interference or temporary disruptions.

The plurality of receivers may, e.g., be configured to obtain beacon signals transmitted from the plurality of sensing devices.

The plurality of receivers may be a plurality of receiver units or a plurality of gateways. However, a subgroup of receivers from the plurality of receivers may form part of a receiving unit or a gateway unit. In other words, a receiving unit, or a gateway unit, may comprise a plurality of receivers. Similarly, a first subgroup of receivers may be part of a first receiver unit, and a second subgroup of receivers may be part of a second receiver unit, etc. Each receiver unit or gateway (i.e., each subgroup of receivers) may, e.g., be configured to capture beacon signals from a specific subset of the sensing devices.

The receivers may function as intermediaries, e.g., receiving beacon signals from the sensing devices and transmitting the data to the processing unit for merging and analysis. The use of multiple receivers enhances system reliability by increasing the chance of a beacon signal being picked or registered by a receiver, mitigating the risk of single-point failures, and providing broader coverage within a monitored environment. This distributed architecture also facilitates scalability, allowing the system to accommodate a growing number of sensing devices without compromising, or at least without substantially compromising, performance or data integrity.

Furthermore, the processing unit may enable the system to address incomplete datasets. Specifically, a receiver may, in its technical nature, only be able to register and/or process one signal at a time. Further, certain environments may be prone to signal interference or temporary disruptions. Hence, receivers may occasionally miss beacon signals, leading to data stream gaps. To mitigate this, the processing unit may compare combinations of identifiers and counters across all receivers, e.g., to identify discrepancies in an expected sequence. These discrepancies may be addressed by complementing the incomplete datasets, for example, by merging data received from multiple receivers, creating a consolidated dataset. The merging process inherently addresses potential data gaps, as the processing unit compares identifiers and counters across all receivers. By identifying discrepancies in expected sequences, or a missing instance of an expected beacon signal, incomplete datasets can be complemented and/or completed.

In other words, the processing unit may be configured to manage incoming data streams, e.g., ensuring data integrity and mitigating errors caused by signal overlap or transmission loss.

Generally, by merging data from multiple receivers, the system mitigates errors, improves data throughput, and provides a more accurate representation of the monitored conditions. Phrased differently, by mitigating occurrences of gaps in beacon signal reception, the system enables a more accurate detection of transient events and rapid changes in monitored conditions. This is, e.g., helpful in applications where even small data errors can have significant consequences.

The identifier and the beacon counter may together form a unique beacon identifier, BID, for each beacon signal. In other words, each beacon signal may comprise a unique BID formed by the identifier and the beacon counter for each beacon signal.

This may streamline data processing and/or enhance the efficiency of data merging. The BID may serve as a unique key for identifying and correlating beacon signals from sensing devices.

The unique BIDs may be constructed by combining a beacon identifier with a beacon counter. Hence, each transmitted beacon signal is uniquely addressable. The identifiers may take various forms, ranging from simple alphanumeric characters to more complex, predefined sequences such as names or codes. For example, the identifier could be a sequentially incrementing letter (A, B, C...) or a predefined list of names (SensorX, SensorY, SensorZ, etc.). In the latter case, the system may store the predefined list of names for efficient identification. The beacon counter, conversely, may be a numerical value that increments with each successive transmission from a given sensing device.

The BID may be formed by concatenating the identifier and the beacon counter. This may result in a composite BID (e.g., '[Identifier]-[Counter]'). Hence, each beacon signal may have a BID such as 'SensorX-1', 'SensorX-2' etc. from sensing device 'SensorX', and/or 'SensorY-1', 'SensorY-2', etc. from sensing device 'SensorY'. The BIDs hence allow for unambiguous identification of each beacon signal. While the counter is typically a numerical value, it may also be represented by a sequentially changing letter or symbol. Generally, the combination of an identifier and a counter should create a unique beacon signal (i.e., telegram) identifier, e.g., for enabling accurate data association.

In an example, the beacon counter of each beacon signal may be a sequential beacon counter incremented by at least one for each successive transmission of a beacon signal from the corresponding sensing device. The incrementation may be a fixed value such as '+1'. However, the incrementation value may be dynamically adjusted or set to a value greater than one, such as '+2' or '+3'. Generally, the beacon counter may be sequential in any suitable manner such that each successive transmission results in a predictably increasing counter value.

This enables determination of a clear and unambiguous sequence of beacon signals, simplifying data analysis and interpretation. In other words, this enables a mapping of a clear and unambiguous chronological order of transmissions, facilitating accurate data reconstruction and enabling the system to reliably detect missing or duplicated signals. The sequential nature of the beacon counter allows the processing unit to validate data integrity, identify gaps in the data stream, and further accurately estimate missing values, e.g. by calculating a mean value of nearest neighbors of a missing beacon signal (i.e., calculating a mean value of the values of the, in sequence, nearest neighbors to the missing beacon counter value).

The processing unit may be configured to filter the received data prior to merging by discarding beacon signals identified as duplicates based on matching BIDs.

This enables improved data accuracy and reduces processing overhead by eliminating redundant information.

Particularly, the processing unit may be configured to discard redundant beacon signals and/or selectively process only beacon signals with unique combinations of identifiers and counters. Duplicate registrations of beacon signals (i.e., BIDs), e.g., arising from overlapping coverage zones or signal reflections, may be identified by matching identifiers and beacon counters. The processing unit may be configured to form the consolidated dataset by only merging beacon signals exhibiting unique combinations of identifiers and counters. In other words, the processing unit may be configured to form the consolidated dataset by only merging beacon signals exhibiting a unique BID, thereby effectively filtering out any potential beacon signal duplicates.

In one example, one of the receivers may comprise the processing unit. For example, the receiver comprising the processing unit may be a master receiver.

This reduces system complexity and cost by integrating processing capabilities within the receiver infrastructure. A master receiver can coordinate data collection and merging from multiple receivers.

In another example, the processing unit may be a central computer system. The master receiver may be communicatively connected to the processing unit. The master receiver, or any of the plurality of receivers, may be wirelessly (e.g., via Wi-Fi) or physically (e.g., via ethernet) connected to the processing unit.

In an exemplary embodiment where the receivers are gateways, a plurality of secondary gateways may be communicatively connected a master gateway. The master gateway may comprise the processing unit or may be configured to channel data to the processing unit.

However, the processing unit may be implemented as an external computer system. Such an external computer system may provide processing power and/or memory capacity to manage the data from the plurality of receivers. Separating the processing unit from the receivers may, e.g., enable central processing at a remote location from the receivers.

The plurality of sensing devices may be configured to monitor conditions in a high-power converter system and/or in electrical substations.

In other words, the sensing devices may be configured to observe and collect data related to environmental or operational parameters within high-power converter systems and/or electrical substations. Some exemplary parameters that may be observed (i.e., types of data), may be voltage, current, temperature, humidity, acceleration, and/or electromagnetic interference. However, the system may be implemented in any suitable environment or context. The system may, e.g., be tailored to suit various system architectures or operational requirements, allowing for flexible deployment in diverse scenarios, such as in electrical infrastructure scenarios.

The system may hence be utilized to reliably collect data, such as system health and operational trends, from high-power converter system and/or electrical substations.

The processing unit may be configured to resolve discrepancies in beacon counter sequences received from the plurality of receivers by comparing received beacon counter values to expected beacon counter values during a predetermined transmission interval.

In other words, the processing unit may be configured to identify and correct inconsistencies in sequences of beacon counter values that are received from multiple receivers. The beacon counter values incrementing with each transmission of a beacon signal, may hence be used to track the order and timing of the beacon signals. Specifically, discrepancies may arise when the received beacon counter values do not align with what the processing unit expects, e.g., such as if a receiver only detected/registered beacon signals with beacon counter values '1', '2', '3', '5', and '6' from a specific sensing device (i.e., thereby missing the beacon signal with beacon counter value '4' from said specific sensing device). To resolve such issues, the processing unit may compare the actual received values against the expected sequence of values that should have been transmitted, e.g., during a predefined time window. This comparison may help determine whether any data was lost. Consequently, the processing unit may check if any of the other receivers in the plurality of receivers detected/registered a beacon signal with beacon counter value '4' from said specific sensing device. If said beacon signal was detected by another receiver, the data of said beacon signal can be merged with the data from the specific sensing device, and thus effectively creating a complemented (i.e., consolidated) dataset.

This ensures data consistency and reliability by correcting errors and handling beacon signals undetected by one or more receivers.

By ensuring that beacon signals are correctly sequenced and accounted for, the system may maintain synchronization across distributed receivers. Generally, this may reduce the impact of transmission errors or network latency, thereby improving an overall system robustness and performance.

The processing unit may have access to a memory configured to store a history of received beacon counters for each identifier.

This enables accurate discrepancy resolution and facilitates the detection of anomalies or unusual behavior. Particularly, the memory may serve as a component for resolving discrepancies, detecting anomalies, and/or accurately reconstructing data streams. By maintaining a history of expected beacon counter values, the processing unit can identify missing or out-of-sequence transmissions, enabling data imputation and preventing erroneous interpretations. The historical data may further facilitate analytics of the received data, allowing the system to identify trends, predict potential failures, and/or optimize monitoring parameters. The memory may be configured for providing efficient data storage and retrieval, e.g., supporting the system's ability to provide a comprehensive and reliable view of monitored conditions.

The processing unit may further be configured to transmit the consolidated dataset to at least one of: a computer system, a control room server, or a cloud-based data repository.

This enables remote monitoring, data analysis, and control, providing valuable insights and enabling informed decision-making.

Generally, the processing unit may be configured to transmit the consolidated dataset to any suitable downstream system, including a computer system, e.g., a computer monitoring system, for real-time visualization and/or analysis, a control room server for operational decision-making, and/or a cloud-based data repository for long-term storage, historical trend analysis, and/or remote access. The system may hence be integrated into an existing infrastructure.

Further, the cloud-based data repository may, e.g., be a cloud infrastructure.

One or more receivers of the plurality of receivers may be dedicated to receiving beacon signals from a subgroup of the plurality of sensing devices, said one or more receivers and said subgroup thereby forming a pico-network.

Phrased differently, the overall system can be structured as a modular beacon infrastructure comprising a plurality of interconnected pico-networks. Each pico-network may operate as a self-contained subsystem, comprising a dedicated group of receivers and the corresponding beacon devices transmitting signals within a localized area. This arrangement allows for a scalable and resilient systems, e.g., where individual pico-networks can operate independently or collectively contribute to the overall data collection and analysis. By dedicating specific receivers to a subgroup of sensing devices, the system may mitigate interference, reduce data processing load, and/or enhance the reliability of the collected data.

This improves scalability and reduces interference by dividing the sensing network into smaller, manageable units.

A transmission power within each pico-network may be limited to be below a threshold to reduce interference with neighboring pico-networks.

This mitigates signal overlap and ensures reliable communication within each pico-network.

Further, the implementation of pico-networks with limited transmission power allows for scalable deployment in large facilities without overwhelming the system with interference, improving overall network performance and reliability. Furthermore, a localized transmission limitation within pico-networks may mitigate the risk of overloading the system with beacon signals, improving processing efficiency and responsiveness.

However, a degree of controlled signal overlap may be utilized to exchange information between adjacent pico-networks, e.g., enabling data sharing, synchronization, and/or collaborative data analysis. Hence, a more robust and resilient system may be enabled, e.g., where information can be exchanged even in the event of communication failures within a single pico-network.

According to a second aspect of the present disclosure, there is provided a method for processing beacon signals, the method comprises: receiving, at a plurality of receivers, beacon signals from a plurality of sensing devices, wherein each beacon signal comprises an identifier identifying the sensing device from which the beacon signal is transmitted and a beacon counter incremented for each successive beacon signal transmitted from the sensing device identified by the identifier; receiving, from each receiver, at a processing unit, data relating to the received beacon signals; and merging, at the processing unit, the received data based on the identifiers and the beacon counters of the received beacon signals to generate a consolidated dataset.

Hence, there is provided a robust and efficient method for collecting, processing, and consolidating data from multiple sensing devices.

This aspect may generally present the same or corresponding advantages as the former aspect.

The method may further comprise filling gaps in the consolidated dataset by estimation of missing data values. In other words, the method may further comprise a data imputation step, wherein gaps in the consolidated dataset are filled by estimation of missing data values. Hence, data completeness and accuracy may be further improved.

The estimation may comprise calculating a mean value between two or more data points, and/or utilizing an artificial intelligence (AI) algorithm trained on historical data.

By employing one or more AI algorithms trained on historical data, intelligent estimation of missing data points is enabled, even further enhancing data completeness and accuracy.

For example, by reducing a missing telegram rate and further completing data gaps, the system enhances data throughput and provides a more comprehensive and reliable view of monitored conditions.

Generally, the estimation process may utilize any suitable technique, including simple interpolation methods, statistical averaging, and/or more advanced algorithms such as artificial intelligence models trained on historical data.

The method may further comprise transmitting, from the processing unit, the consolidated dataset to at least one of: a computer system, a control room server, or a cloud-based data repository.

This enables remote monitoring, data analysis, and control, e.g., for providing insights and/or enabling informed decision-making.

According to a third aspect, there is provided a non-transitory computer program product comprising instructions, which when executed by a processor, cause the processor to perform the steps according to the second aspect. In other words, there is provided a computer-program product comprising a non-transitory computer-readable storage medium having stored thereon a computer program for processing beacon signals according to the second aspect.

This aspect may generally present the same or corresponding advantages as the former aspects.

In an example, the processor may be configured to at least perform the steps of receiving, from each receiver, at a processing unit, data relating to the received beacon signals, and/or merging, at the processing unit, the received data based on the identifiers and the beacon counters of the received beacon signals to generate a consolidated dataset.

In an example, the processor may be configured to at least perform a step of transmitting, from each receiver to the processing unit, data relating to the received beacon signals.

Effects and features of the first, second, and third aspects are largely analogous. Examples mentioned in relation to the first, second, and third aspects are largely compatible. It is further noted that the disclosure relates to all possible combinations of features unless explicitly stated otherwise.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise.

### Brief description of the drawings

The above, as well as additional objects, features, and advantages of the present inventive concept, will be better understood through the following illustrative and non-limiting detailed description, with reference to the appended drawings. In the drawings like reference numerals will be used for like elements unless stated otherwise.
Fig. 1 is a schematic illustration of a system for processing beacon signals.
Fig. 2 is a schematic illustration of a further system for processing beacon signals.
Fig. 3 is a schematic illustration of two sub-systems for processing beacon signals.
Fig. 4 is a flow chart of a method for processing beacon signals.

### Detailed description

Hereinafter, the principle of the present disclosure will be described with reference to illustrative examples. All these examples are given merely for the person skilled in the art to better understand and further practice the present disclosure, but not for limiting the scope of the present disclosure. For example, features illustrated or described as part of one example may be used with another example to yield still a further example. In the interest of clarity, not all features of an actual implementation are described in this specification. It will of course be appreciated that in the development of any such actual example, numerous implementation-specific decisions should be made to achieve a developers' specific goals, such as compliance with system-related and business-related constraints, which will vary from one implementation to another. Moreover, it will be appreciated that such a development effort might be complex and time-consuming but would nevertheless be a routine undertaking for those of ordinary skill in the art having the benefit of this disclosure.

The disclosed subject matter will now be described with reference to the attached drawings. Various structures, systems and devices are schematically depicted in the drawings for purposes of explanation only and to not obscure the description with details that are well known to those skilled in the art. Nevertheless, the attached drawings are included to describe and explain illustrative examples of the disclosed subject matter. The words and phrases used herein should be understood and interpreted to have a meaning consistent with the understanding of those words and phrases by those skilled in the relevant art. No special definition of a term or phrase, i.e., a definition that is different from the ordinary and customary meaning as understood by those skilled in the art, is intended to be implied by consistent usage of the term or phrase herein. To the extent that a term or phrase is intended to have a special meaning, i.e., a meaning other than that understood by skilled artisans, such a special definition will be expressly set forth in the specification in a definitional manner that directly and unequivocally provides the special definition for the term or phrase.

The present disclosure is based in the investors' realizations that commercially available beacon technologies, typically off-the-shelf products, are generally designed for non-industrial applications where monitored data such as temperature, humidity, motion, and air pressure are not critical for high-precision analytics. These beacons are favored for their relatively low power consumption, achieved by operating without transmission confirmation and allowing for reduced transmission cadences, e.g., in the order of minutes, keeping the overall system power consumption low. In such applications, the loss of a single telegram is typically inconsequential, as the monitored values are expected to remain relatively stable within the selected timing window.

However, adapting beacon technology to the demands of industrial applications necessitates higher reliability standards. In critical processes and operations, missing information can lead to improper monitoring. Increasing the frequency of beacon signals does not address the fundamental problem, i.e., the inherent loss of telegrams, which arises from the limitations of receiver capacity. Despite the implementation of random delays to avoid constant overlap, a receiver can still be occupied processing a previous beacon signal when a subsequent signal arrives, resulting in a significant error rate, often exceeding 50%. This issue intensifies as the number of beacons or their transmission frequency increases.

These challenges currently prevent the widespread adoption of beacon technology in industrial settings. Industrial applications, such as electrical substations and high-power converter systems for transportation (including charging stations, locomotives, trucks, or cars), as well as High-Voltage direct current (HVDC) applications, often require stricter monitoring with higher timing resolution and a greater number of beacons due to the scale of the application. In scenarios requiring the detection of continuous readings, such as motion, seamless reception of telegrams is important to avoid missing transient events. The limited payload of each beacon telegram necessitates a high transmission cadence to convey all necessary information, and harsh environmental conditions may further contribute to data loss, leading to system failure.

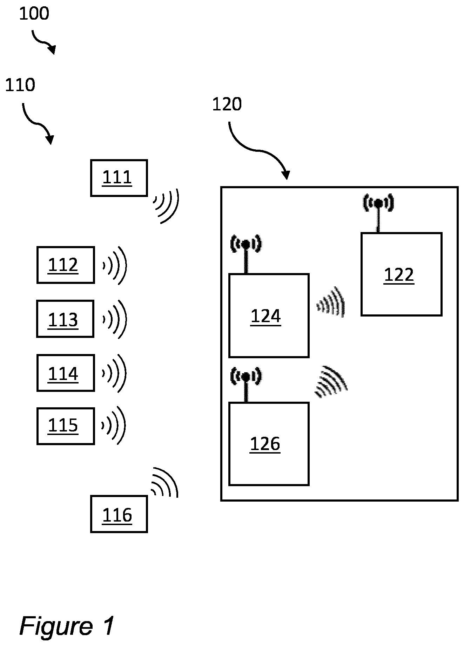

Fig. 1 illustrates a system 100 for processing beacon signals. The system 100 comprises a plurality of receivers 120 configured to receive beacon signals transmitted from a plurality of sensing devices 110, wherein each beacon signal comprises an identifier identifying the sensing device from which the beacon signal is transmitted and a beacon counter incremented for each successive beacon signal transmitted from the sensing device identified by the identifier.

Although not explicitly shown in Fig. 1, the system 100 further comprises a processing unit configured to receive, from each receiver of the plurality of receivers 120, data relating to the received beacon signals, and merge the received data based on the identifiers and the beacon counters of the received beacon signals to generate a consolidated dataset.

The processing unit may, e.g., be implemented as a discrete integrated circuit, a field-programmable gate array (FPGA), or a dedicated microprocessor.

In Fig. 1, it is to be understood that a first receiver 122 in the plurality of receivers 120 may comprise the processing unit. As depicted in Fig. 1, the first receiver 122, receives also the data from a second receiver 124 and a third receiver 126. Hence, the first receiver 122, e.g., comprising the processing unit, can be referred to as a master receiver (or a master gateway). In other words, within the plurality of receivers 120, a designated first receiver 122 (i.e., master receiver), is configured to also function as a central aggregation point for data received from other receivers within the system.

As represented in Fig. 1, the first receiver 122 is operatively connected to receive data streams not only directly from the sensing devices 110, but also from the second receiver 124 and the third receiver 126. This arrangement facilitates a hierarchical data collection architecture, where the first receiver 122 effectively consolidates information from multiple receiver sources.

The physical implementation of the processing unit may vary, ranging from a compact, low-power microcontroller suitable for battery-operated applications to a high-performance multi-core processor capable of handling large volumes of data in real-time. The processing unit may be directly integrated into the first receiver 122 (or any master receiver) as a single monolithic assembly, or it may be implemented as a separate module physically and/or communicatively connected to the first receiver 122, e.g., via a high-speed data interface such as Ethernet and/or optical connections.

Generally, the first receiver 122, functioning as a master receiver, is capable of receiving data from any suitable number of receivers. Hence, the system architecture is inherently scalable, allowing for the addition of new receivers without requiring significant modifications to the existing infrastructure. The master receiver may employ a variety of communication protocols to exchange data with the other receiver units, including but not limited to, radio frequency (RF) communication, Wi-Fi, Bluetooth, low-energy Bluetooth, wired Ethernet connections, optical fiber links, ZigBee, Matter, LoRaWan, and/or any suitable synchronous or asynchronous protocols.

Further, the utilization of multiple receivers 120 increases the total number of received beacon signals. Laboratory testing, as illustrated in the below table, reveals a non-linear relationship between the number of receivers and the percentage of received beacon signals of a total number of sent/emitted beacon signals from a set of sensing devices. The table demonstrates that the addition of more receivers results in a significant improvement in number of received beacon signals.

| | | | |
|---|---|---|---|
| **Number of Receivers** | 1 | 3 | 6 |
| **Received Telegrams (%)** | 51.1 | 75.4 | 85.6 |

Moreover, although not explicitly apparent from Fig. 1, the system 100 employs a robust identification scheme to ensure accurate tracking and consolidation of data received from the plurality of sensing devices 110. Each beacon signal transmitted by a sensing device 111, 112, 113, 114, 115, 116 of the plurality of sensing devices 120 is uniquely identifiable by a combination of an identifier (corresponding to the sensing device transmitting the beacon signal) and a beacon counter (indicating a beacon signal in a sequence of beacon signals from a specific sensing device).

Hence, a composite identifier, i.e., unique beacon identifier (BID) can be formed by the concatenation, or logical combination, of two distinct components: an identifier specific to the sensing device and a sequential beacon counter associated with said sensing device.

The identifier of a sensing device serves as a static label, uniquely distinguishing each sensing device within the plurality of sensing devices 110. This identifier may take various forms, ranging from a simple alphanumeric code to a more complex data structure. For instance, the identifier could be a universally unique identifier (UUID), a Media Access Control (MAC) address, a custom alphanumeric string, and/or a combination of such identifiers. The identifiers may be pre-programmed into the sensing devices during manufacturing or installation. For example, the identifier of a sensing device may remain constant throughout the sensing device's operational lifetime.

Complementing the (static) identifier is the sequential beacon counter. This counter may be a numerical value that is incremented by at least one for each successive beacon signal transmitted by the corresponding sensing device. The beacon counter may be initialized to a predetermined starting value, e.g., zero or one, and incremented modulo a maximum counter value. When the beacon counter is incremented modulo a maximum value, it increases by one with each step. Upon reaching the maximum value, the counter resets to zero and continues incrementing. This ensures the beacon counter remains within a fixed range. For instance, with an exemplary maximum value of 5, the beacon counter progresses through the sequence: 0, 1, 2, 3, 4, 5, and then wraps around to 0, 1, 2, 3, 4, 5, and so on.

The counter value may be embedded within each beacon signal and/or transmitted along with the sensing device identifier.

The combination of the sensing device identifier and the sequential beacon counter creates a truly unique BID for each beacon signal. This BID may serve as a key for tracking and consolidating data received from the various sensing devices 110. The processing unit can, e.g., utilize the BIDs to identify duplicate beacon signals and/or to resolve discrepancies in beacon counter sequences.

Prior to merging the received data into the consolidated dataset, the processing unit may filter the data to discard duplicate beacon signals. This filtering process is based on a comparison of the BIDs received from the various receivers 120. If two or more receivers 120 report beacon signals with identical BIDs, the processing unit identifies the beacon signals as duplicates and discards all but one. This ensures that the merged dataset contains only unique data points, eliminating the potential for errors or inaccuracies.

The filtering process may be implemented using a variety of data structures and algorithms, such as hash tables, databases, and/or binary search trees.

Furthermore, although not explicitly apparent form Fig. 1, the processing unit may be configured to resolve discrepancies in beacon counter sequences received from the plurality of receivers 120 by comparing received beacon counter values to expected beacon counter values, e.g., during a predetermined transmission interval.

Hence, the processing unit may employ a sequence resolution algorithm to maintain data integrity and completeness. Such an algorithm may detect and resolve discrepancies in beacon counter sequences received from the plurality of receivers 120. The inherent nature of wireless communication introduces the possibility of signal loss or interference. For example, receivers may, at times, be occupied receiving or processing other beacon signals when a new beacon signal arrives, leading to missed receptions.

The sequence resolution algorithm may operate by comparing the received beacon counter values to expected counter values derived from a predetermined beacon counter sequence. The sequence resolution algorithm may flag missing values and/or reconstruct the missing data. The sequence resolution algorithm, or the processing unit, may hence analyze the data received from the receivers 120. The sequence resolution algorithm, or processing unit, may identify if a missing beacon counter value from a specific sensing device was received and present in the data obtained from another receiver. For example, if the first receiver 122 missed counter value '5' from sensor X, but the second receiver 124 successfully received and registered that value, the algorithm can complement the incomplete dataset by incorporating the missing information from the alternative source.

The cross-referencing capability ensures that even in the presence of intermittent signal loss or receiver congestion, the system 100 maintains a complete and accurate representation of the monitored conditions. As will be further explained below, the algorithm may employ techniques such as interpolation or extrapolation to estimate missing values if a direct match cannot be found.

The transmission interval may be a predetermined time interval in which, e.g., beacon signals with beacon counter 1 to 100 are expected to be received from a certain sensing device in the plurality of sensing devices 110. However, the beacon counter is not limited to enumerating successive transmissions. The counter may represent a point in time, such as a 24-hour time, where a sensing device in the plurality of sensing devices 110 transmits a beacon signal at regular intervals, for example, every second or minute. Consequently, the transmission interval may extend to a full day. In such scenarios, the beacon counter would increment with each transmission within that day, effectively representing the time of the day at which the signal was sent.

The counter may reset at the start of a new day, providing a cyclical count that aligns with the daily operational cycle. Alternatively, if employing a continuous counting sequence, the counter may reset after reaching a predetermined maximum value, such as 86,400 seconds (representing a full day). However, the reset point is not rigidly fixed, the counter may never reset or may reset at virtually any suitable point. For example, in applications requiring long-term data logging, the counter may reset less frequently. Conversely, in applications requiring high-resolution timestamping, the counter may reset more frequently.

Additionally, although not explicitly shown in Fig. 1, the processing unit may further have access to a dedicated memory configured to store a history of received beacon counters for each identifier. The memory may serve as a lookup table, allowing the processing unit to determine the expected counter value for a given sensing device. The memory may be organized by sensing device identifiers, with each identifier associated with a list of, e.g., recently, received counter values from a specific sensing device. The length of the list may be determined by the transmission interval.

The processing unit may periodically update the list in the memory with new counter values, discarding older values to maintain a manageable memory footprint. The memory may be implemented using a variety of storage technologies, such as static random-access memory (SRAM), dynamic random-access memory (DRAM), Solid state disk (SSD) and/or flash memory.

Further, although not explicitly depicted in Fig. 1, the sensing devices 110 may be configured to monitor conditions in infrastructure applications, such as high-power converter systems and/or electrical substations. The sensing devices 110 may, e.g., monitor a wide range of parameters, including, but not limited to, voltage, current, temperature, pressure, humidity, velocity, acceleration, and vibration. The sensing devices 110 may be strategically deployed throughout the infrastructure to capture these parameters and transmit the data to the processing unit (e.g., via the master receiver 122 as in Fig. 1).

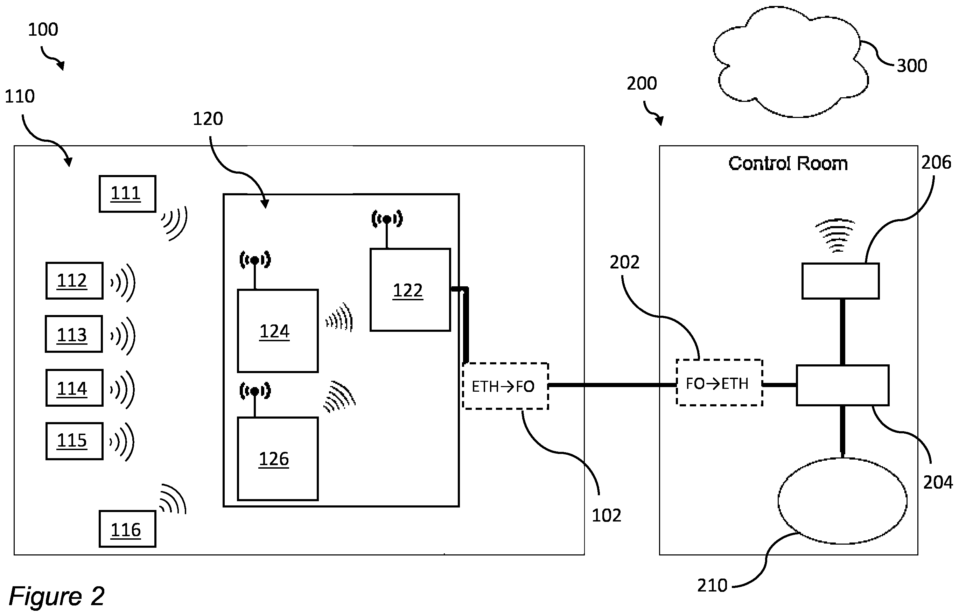

Fig. 2 depicts a schematic illustration of a system 100 for processing beacon signals such as described in relation to Fig. 1. However, in Fig. 2, the processing unit is further configured to transmit the consolidated dataset to a control room server 200 comprising a computer system 210 communicatively connected to a cloud-based data repository 300.

As previously detailed, the system 100 comprises a plurality of receivers 120 positioned to capture beacon signals transmitted from a plurality of sensing devices 110. The receivers 120, including the first receiver 122, are configured to capture raw beacon data, including the identifier and the beacon counter, as described previously. Notably, the processing unit, responsible for merging, filtering, and consolidating the received data, is no longer necessarily located within the first receiver 122. While the first receiver 122 may incorporate the processing unit, as described in relation to Fig. 1, Fig. 2 demonstrates that the processing unit may reside within the control room server 200, computer system 210, or within the cloud-based data repository 300.

The first receiver 122 may hence function primarily as a channeling gateway, receiving data from the plurality of receivers 120 and forwarding it to the centralized processing unit. While not explicitly depicted in Fig. 2, it is conceivable that each receiver unit 122, 124, 126 could be directly communicatively connected to the processing unit or the control room server 200, e.g., bypassing the first receiver 122.

As further depicted in Fig. 2, to facilitate data transmission from the first receiver 122 to the control room server 200, an optional Ethernet-to-fiber optics converter 102 may be employed. This converter allows for the transmission of data over long distances using fiber optic cables, which offer higher bandwidth and lower signal attenuation compared to traditional Ethernet cables. The converted data is then received by an optional fiber optics-to-Ethernet converter 202, which converts the signal back to Ethernet for compatibility with the control room server 200.

The Ethernet signal is then routed through an Ethernet switch 204, e.g., a network device that directs data packets to their intended destination. The Ethernet switch 204 is communicatively connected to both the computer system 210 and a communication device 206. The computer system 210, e.g., an industrial-grade computer, may serve as an interface for control room operators, and/or may house the processing unit for forming the consolidated dataset. The communication device 206, e.g., a 5G router, general internet connection, a satellite modem, or any suitable wireless communication device, provides connectivity to the cloud-based data repository 300.

The cloud-based data repository 300, such as an Azure Cloud Virtual Machine (VM), provides scalable and secure data storage and analysis capabilities. The consolidated dataset, after being processed and filtered by the processing unit, is transmitted to the cloud-based data repository 300 via the communication device 206. Within the cloud-based data repository 300, the data can be stored, analyzed, and visualized using a variety of tools and techniques. This allows for remote monitoring of the sensed parameters, trend analysis, and predictive maintenance.

If the processing unit is part of, or integrated within, the cloud-based data repository 300 (potentially utilizing a virtual machine or other cloud-based computing resources), the data received via the communication device 206 is fed into the processing unit residing within the cloud-based data repository 300. The processing, filtering, and consolidation of the data would then occur entirely within the cloud. The processed and consolidated data is then readily available for storage, visualization, and/or remote monitoring within the cloud-based data repository 300.

However, the processing unit may be distributed, encompassing both cloud-based resources and on-premises computing infrastructure. In a non-limiting example, certain processing steps, such as initial data filtering and pre-processing, may be performed by the computer system 210 within the control room server 200, leveraging its local processing capabilities and/or minimizing latency. Conversely, more computationally intensive tasks, such as complex data analysis, machine learning model training, and long-term data storage, may be offloaded to the cloud-based data repository 300, capitalizing on scalability and processing power. For example, the computer system 210 may perform initial anomaly detection and forming of a consolidated dataset, while the cloud-based processing unit may employ more machine learning algorithms to identify patterns and/or estimate missing data values.

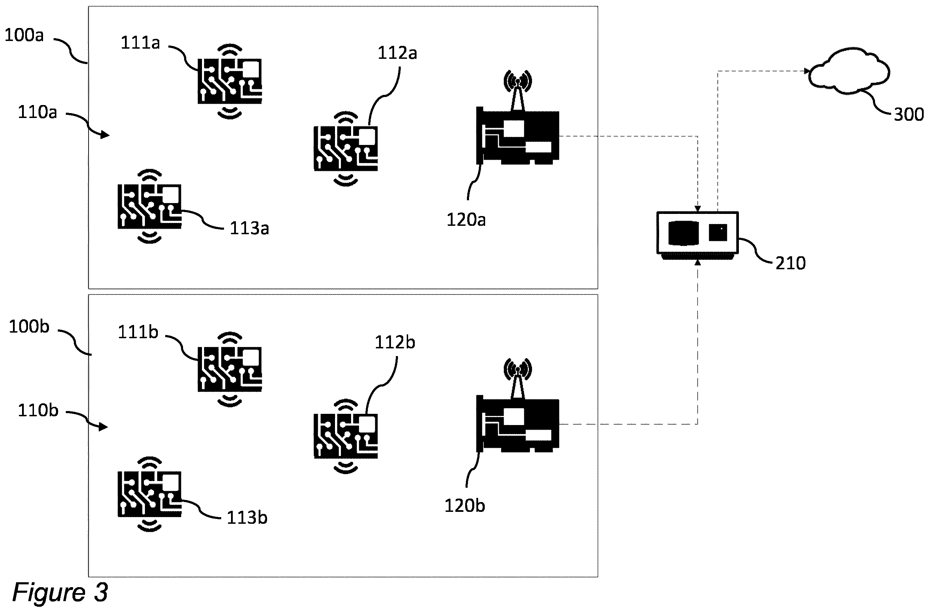

Fig. 3 depicts a first sub-system and a second sub-system for processing beacon signals, e.g., as described in relation to any of Figs. 1 or 2. The first sub-system comprises a first plurality of sensing devices 111a, 112a, 113a, and a first receiver 120a. Similarly, the second sub-system comprises a second plurality of sensing devices 111b, 112b, 113b, and a second receiver 120b.

Hence, in Fig. 3, the first receiver 120a is dedicated to receiving beacon signals from a first subgroup 110a of a plurality of sensing devices, and the second receiver 120b is dedicated to receiving beacon signals from a second subgroup 110b of the plurality of sensing devices. Each receiver 120a, 120b and corresponding subgroup 110a, 110b thereby forms a respective pico-network 100a, 100b (i.e., sub-system).

It is to be understood that the number of pico-networks depicted in Fig. 3 is merely illustrative. Any suitable number of pico-networks can be employed. The system 100 is hence inherently scalable, allowing for the addition of new pico-networks as needed. Furthermore, the first receiver 120a of the first pico-network 100a may, in practice, represent a plurality of receivers working in concert to collect data from the associated sensing devices 110a. Likewise, the second receiver 120b of the second pico-network 100b may represent a plurality of receivers. In other words, the first receiver 120a may be a first receiver unit (or a first gateway) comprising a first plurality of receivers, and/or the second receiver 120a may be a second receiver unit (or a second gateway) comprising a second plurality of receivers.

Fig. 3 further depicts the first receiver 120a and the second receiver 120b being communicatively connected to a computer system 210. This computer system 210 may serve as an aggregation point for data collected from all pico-networks 100a, 100b. The computer system 210 may perform data processing, filtering, and/or analysis, e.g., as described in relation to Fig. 2.

To mitigate interference between neighboring pico-networks, the transmission power within each pico-network 100a, 100b may be limited to a predetermined threshold. This threshold may be selected to ensure reliable communication within each pico-network while mitigating the potential for interference with neighboring pico-networks.

However, the processing unit, receiver 120a, 120b, and/or computer system 210, may be configured to sort out data from unexpected beacon signals. Each receiver 120a, 120b may be pre-configured to monitor only a specific sub-group of sensing devices 110a, 110b within a larger plurality of sensing devices. The receiver 120a, 120b may be configured to recognize and/or accept beacon signals from devices possessing pre-defined identifiers.

For example, a receiver dedicated to monitoring a sub-group of sensors may be configured to accept or process beacon signals only from sensors within that sub-group. If a beacon signal is received with an identifier not recognized by the processing unit, receiver, or computer system, i.e., indicating that it originates from a sensing device outside of, or not belonging to, the designated sub-group of that specific pico-network, the beacon signal may be handled according to pre-defined rules.

The beacon signal to which the unrecognized identifier corresponds may be disregarded entirely, effectively filtering out potential interference. Alternatively, the beacon signal may be re-routed to a neighboring pico-network for potential processing. This allows for data sharing and collaboration between pico-networks 100a, 100b, potentially complementing their data and providing a more comprehensive view of the monitored environment. For instance, a signal originating from a sensing device near the boundary between two pico-networks might be received by both receivers.

Fig. 3 further illustrates the computer system 210 being communicatively connected to a cloud-based data repository 300. The computer system 210 hence serves as an interface between the localized pico-networks 100a, 100b and the cloud infrastructure 300. The computer system 210 may, e.g., aggregate and/or pre-process data before transmitting it to the cloud repository 300.

Notably, the computer system 210 and the cloud-based data repository 300 may not necessarily be mutually exclusive, in practice, they may be integrated as part of, or coupled to, a control room server (e.g., as depicted in Fig. 2).

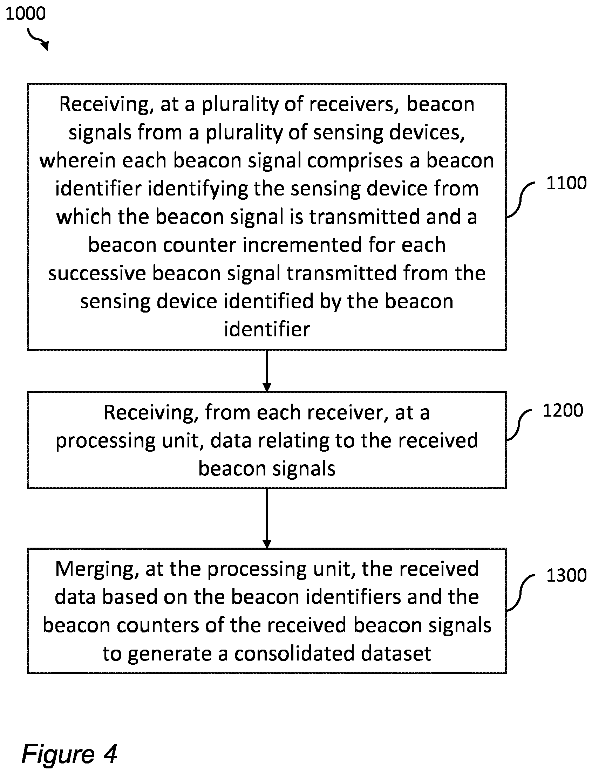

Fig. 4 depicts steps of a method 1000 for processing beacon signals. In Fig. 4, the method 1000 comprises:
receiving 1100, at a plurality of receivers, beacon signals from a plurality of sensing devices, wherein each beacon signal comprises an identifier identifying the sensing device from which the beacon signal is transmitted and a beacon counter incremented for each successive beacon signal transmitted from the sensing device identified by the identifier;
receiving 1200, from each receiver, at a processing unit, data relating to the received beacon signals; and
merging 1300, at the processing unit, the received data based on the identifiers and the beacon counters of the received beacon signals to generate a consolidated dataset.

It is to be appreciated that the method may comprise further steps as realized by the present disclosure, in particular, in view of the drawings.

Although not explicitly shown in Fig. 4, the method may further comprise a step of filling gaps in the consolidated dataset. The step of filling gaps in the consolidated dataset may, e.g., comprise estimation of missing data values. For example, the estimation may comprises calculating a mean value between two or more data points (e.g., data points adjacent to the missing data), and/or utilizing an artificial intelligence algorithm. The artificial intelligence algorithm, such as a neural network or regression model, may be trained on historical data to predict missing values based on patterns and/or correlations observed in the data.

For example, a neural network or regression model may be employed, e.g., to learn non-linear relationships and/or extrapolate from historical data.

The historical data utilized for training the artificial intelligence algorithm may have been collected from systems comprising receivers employed in a certain setting or environment, e.g., reflecting the operational conditions of a current application. For example, data may be sourced from sensing devices monitoring the same parameters (e.g., temperature, vibration, current) in a comparable industrial setting, such as an electrical substation or a high-power converter system. This historical data may provide the artificial intelligence algorithm with an understanding of an expected behavior of the monitored parameters, enabling it to accurately predict missing values based on contextual information.

The training process may involve feeding the artificial intelligence algorithm with a dataset of historical data, e.g., including complete and/or incomplete datasets. The artificial intelligence algorithm may be configured to learn to identify patterns and correlations between different parameters, and/or to predict missing values based on these learned relationships.

Furthermore, the artificial intelligence algorithm is not limited to simple extrapolation. It can also leverage contextual information, such as the time of day, the operating conditions of the system, and/or the historical behavior of the monitored parameters, to improve its predictions.

Further, although not shown in Fig. 4, the method 1000 may further comprise transmitting, from the processing unit, the consolidated dataset to at least one of: a computer system, a control room server, or a cloud-based data repository. Alternatively, the method 1000 may further comprise transmitting the data relating to the received beacon signals directly to at least one of: a computer system, a control room server, or a cloud-based data repository.

In the above the inventive concept has mainly been described with reference to a limited number of examples. However, as is readily appreciated by a person skilled in the art, other examples than the ones disclosed above are equally possible within the scope of the inventive concept, as defined by the appended claims.

## Claims

1. A system (100) for processing beacon signals, the system (100) comprising:
a plurality of receivers (120) configured to receive beacon signals transmitted from a plurality of sensing devices (110), wherein each beacon signal comprises an identifier identifying the sensing device from which the beacon signal is transmitted and a beacon counter incremented for each successive beacon signal transmitted from the sensing device identified by the identifier; and
a processing unit configured to:
receive, from each receiver of the plurality of receivers (120), data relating to the received beacon signals, and
merge the received data based on the identifiers and the beacon counters of the received beacon signals to generate a consolidated dataset.

2. The system of claim 1, wherein the identifier and the beacon counter together form a unique beacon identifier, BID, for each beacon signal.

3. The system of claim 2, wherein the processing unit is configured to filter the received data prior to merging by discarding beacon signals identified as duplicates based on matching BIDs.

4. The system of any of claims 1-3, wherein one of the receivers comprises the processing unit, and/or wherein the receiver comprising the processing unit is a master receiver.

5. The system of any one of claims 1-4, wherein the plurality of sensing devices is configured to monitor conditions in a high-power converter system and/or in electrical substations.

6. The system of any one of claims 1-5, wherein the processing unit is configured to resolve discrepancies in beacon counter sequences received from the plurality of receivers by comparing received beacon counter values to expected beacon counter values during a predetermined transmission interval.

7. The system of any one of claims 1-6, wherein the processing unit has access to a memory configured to store a history of received beacon counters for each identifier.

8. The system of any one of claims 1-7, wherein the beacon counter of each beacon signal is a sequential beacon counter incremented by at least one for each successive transmission of a beacon signal from the corresponding sensing device.

9. The system of any one of claims 1-8, wherein the processing unit is further configured to transmit the consolidated dataset to at least one of: a computer system (210), a control room server (200), or a cloud-based data repository (300).

10. The system of any one of claims 1-9, wherein one or more receivers of the plurality of receivers is dedicated to receive beacon signals from a subgroup of the plurality of sensing devices, said one or more receivers and said subgroup thereby forming a pico-network.

11. The system of claim 10, wherein a transmission power within each pico-network is limited to be below a threshold to reduce interference with neighboring pico-networks.

12. A method (1000) for processing beacon signals, the method (1000) comprising:
receiving (1100), at a plurality of receivers, beacon signals from a plurality of sensing devices, wherein each beacon signal comprises an identifier identifying the sensing device from which the beacon signal is transmitted and a beacon counter incremented for each successive beacon signal transmitted from the sensing device identified by the identifier;
receiving (1200), from each receiver, at a processing unit, data relating to the received beacon signals; and
merging (1300), at the processing unit, the received data based on the identifiers and the beacon counters of the received beacon signals to generate a consolidated dataset.

13. The method of claim 12, further comprising filling gaps in the consolidated dataset by estimation of missing data values, wherein said estimation optionally comprises calculating a mean value between two or more data points, and/or utilizing an artificial intelligence algorithm trained on historical data.

14. The method of any one of claims 12-13, further comprising transmitting, from the processing unit, the consolidated dataset to at least one of: a computer system, a control room server, or a cloud-based data repository.

15. A non-transitory computer program product comprising instructions, which when executed by a processor, cause the processor to perform the steps of the method (1000) of any one of claims 12-14.
